**Europäisches Patentamt**

**European Patent Office**

**Office européen des brevets**

(19)

(11) Veröffentlichungsnummer: **0 234 463 B1**

(12) # EUROPÄISCHE PATENTSCHRIFT

(45) Veröffentlichungstag der Patentschrift:
**13.03.91 Patentblatt 91/11**

(51) Int. Cl.⁵ : **C08K 7/06, C08L 67/06,
C08J 5/24**

(21) Anmeldenummer: **87102115.0**

(22) Anmeldetag: **14.02.87**

(54) Metalldrahteinlagen enthaltende, photopolymerisierbare Formmassen.

Die Akte enthält technische Angaben, die nach dem Eingang der Anmeldung eingereicht wurden und die nicht in dieser Patentschrift enthalten sind.

(30) Priorität: **21.02.86 DE 3605574**

(43) Veröffentlichungstag der Anmeldung:
**02.09.87 Patentblatt 87/36**

(45) Bekanntmachung des Hinweises auf die Patenterteilung:
**13.03.91 Patentblatt 91/11**

(84) Benannte Vertragsstaaten:
**BE CH DE FR GB IT LI NL**

(56) Entgegenhaltungen:
**EP-A- 0 023 634
DE-A- 1 159 641
GB-A- 971 597
GB-A- 2 027 042
DATABASE WPIL, "Accession Number" 83-
00978K; & JP-A-57 188 322 (HITACHI)**

(73) Patentinhaber: **BASF Aktiengesellschaft
Carl-Bosch-Strasse 38
W-6700 Ludwigshafen (DE)**

(72) Erfinder: **Scholz, Dankmar
Heidelberger Ring 31
W-6710 Frankenthal (DE)**
Erfinder: **Liebe, Klaus
Pierstrasse 4
W-6710 Frankenthal (DE)**

## Beschreibung

Die Erfindung betrifft photopolymerisierbare, flächige Formmassen auf Basis von ungesättigten Polyesterharzen, welche Metalldrähte eingelegt enthalten, sowie ein Verfahren zur Herstellung von Formkörpern durch Aushärten der Formmassen.

In der EP-A-23 634 (US-A-4 425 287) ist ein Verfahren zur Herstellung von Formkörpern aus ungesättigten Polyesterharzen beschrieben. Danach wird ein Gemisch aus einem ungesättigten Polyester, Monomeren, einem Photoinitiator, einem Eindickmittel sowie pulver- und/oder faserförmigen Zusatzstoffen hergestellt. Dieses Gemisch wird zu einem Halbzeug eingedickt, das Halbzeug wird verformt und schließlich durch Bestrahlung mit UV-Licht ausgehärtet. Wenn man das Halbzeug in Formen prägt, verpreßt oder tiefzieht, dann muß die Aushärtung durch Bestrahlen in der Form vorgenommen werden, was eine verhältnismäßig lange Verweilzeit in der Form zur Folge hat. Versucht man, das eingedickte, verformte Halbzeug aus der Form zu entnehmen, um es in einem separaten Bestrahlungsschritt auszuhärten, so zeigt sich, daß es nicht formstabil ist, sondern aufgrund seiner hohen Rückstellkräfte auch dann seine Form verliert, wenn es einen sehr hohen Gehalt an Eindickmittel oder Verstärkungsmaterialien aufweist.

Der Erfindung lag daher die Aufgabe zugrunde, das bekannte Verfahren so zu modifizieren, daß die Rückstellkräfte des eingedickten, verformten Halbzeugs weitgehend aufgehoben werden, so daß es seine Gestalt nach der Entnahme aus der Form nicht mehr verliert. Eine weitere Aufgabe besteht darin, die Taktzeiten beim Tiefziehen und Pressen des Halbzeugs zu verkürzen, so daß auf wirtschaftliche Weise große Stückzahlen von Formkörpern aus verstärkten Polyesterharzen hergestellt werden können.

Es ist bekannt, Metalldrähte und Metallgitter in Formmassen aus ungesättigten Polyesterharzen oder auch in flächige Halbzeuge aus verstärkten Polyesterharzen (SMC-Massen) einzulegen, um die Stabilität der ausgehärteten Formkörper zu erhöhen oder sie elektrisch leitfähig zu machen. Derartige Harzoder SMC-Massen werden thermisch ausgehärtet, so daß sich auch hier eine lange Verweilzeit in der erhitzten Form ergibt.

Es wurde nun gefunden, daß die obengenannten Aufgaben gelöst werden können, wenn die lichthärtbaren Halbzeuge Metalldrähte eingelegt enthalten.

Gegenstand der Erfindung sind demzufolge eine photopolymerisierbare, flächige Formmasse, die ein Gemisch aus

1. einem ungesättigten Polyester,
2. gegebenenfalls einer copolymerisierbaren Vinylverbindung,
3. 0,005 bis 0,5 Gew.% eines Inhibitors,
4. 0,01 bis 3 Gew.% eines Photoinitiators,
5. 0,2 bis 5 Gew.% eines als Eindickmittel wirkenden Oxids oder Hydroxids von Lithium, Magnesium oder Calcium, oder eines Metallalkoholats oder eines Isocyanats,
6. 1 bis 50 Gew.% eines UV-Licht-durchlässigen pulverförmigen Hilfsstoffes, und/oder
7. 5 bis 70 Gew.% eines faserförmigen Verstärkungsmaterials, sowie gegebenenfalls
8. weitere übliche Zusatzstoffe, wobei sich die Prozentangaben auf das Gemisch beziehen, sowie, bezogen auf 100 Gewichtsteile dieses Gemisches, 10 bis 500 Gewichtsteile Metalldraht mit einer Dicke zwischen 0.1 und 2 mm in Form von Gelegen oder von geflochtenen oder verschweißten Grittern enthalten.

Ein weiterer Gegenstand der Erfindung ist ein Verfahren zur Herstellung von Formkörpern, bei denen das oben beschriebene Gemisch zu einem Halbzeug eingedickt, und dieses verformt und ausgehärtet wird, wobei in das Gemisch vor oder nach dem Eindicken Metalldrähte eingelegt werden.

Zu den Ausgangskomponenten 1 bis 8 ist folgendes auszuführen.

1. Als ungesättigte Polyester eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen insbesondere acyclischen Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Cyclohexandiol-1,2, 2,2-Bis-(p-hydroxycyclohexyl)-propan, Trimethylolpropanmonoallylether oder Butendiol-1,4. Ferner können ein-, drei- oder höherwertige Alkohole, wie z.B. Ethylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren, bzw. deren kondensierbaren Derivaten umgesetzt.

Geeignete Carbonsäuren bzw. deren Derivate sind zweibasische olefinisch ungesättigte, vorzugsweise α, β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren oder deren Anhydride, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid und Fumarsäure.

Das Molverhältnis von ungesättigten zu gesättigten Dicarbonsäuren liegt vorzugsweise zwischen 1 : 0 und 1 : 2,5.

Gemische ungesättigter Polyester, darunter auch solche, die in den Vinylmonomeren nur beschränkt löslich sind und leicht kristallisieren, können ebenfalls vorteilhaft eingesetzt werden. Solche leicht kristallisierende ungesättigte Polyester können z.B. aus Fumarsäure, Adipinsäure, Terephthalsäure, Ethylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 10 bis 100, vorzugsweise von 20 bis 60, und mittlere Molekulargewichte von ungefähr 800 bis 6.000, vorzugsweise von etwa 1.000 bis 4.000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220°C aus ihren Ausgangskomponenten nach kontinuierlichen oder diskontinuierlichen Verfahren hergestellt.

Bezüglich der Zusammensetzung ungesättigter Polyester sei beispielsweise auch auf das Buch von H.V. Boenig, Unsaturated Polyesters : Structure and Properties, Amsterdam, 1964, verwiesen. Das Gemisch enthält im allgemeinen 10 bis 80, vorzugsweise 15 bis 70 Gew.%, ungesättigten Polyester.

Ferner können auch Vinylesterharze eingesetzt werden. Dies sind Veresterungsprodukte von Epoxidharzen, vorzugsweise solchen auf Basis Bisphenol A, oder von ethoxyliertem Bisphenol A, mit Methacrylsäure. Sie tragen endständige polymerisierbare Vinylgruppen. Um sie mit Metalloxiden eindickfähig zu machen, können sie an ihren seitenständigen Hydroxylgruppen mit Dicarbonsäuren bzw. deren Anhydriden verestert werden. Auf diese Weise entstehen seitenständige Carboxylgruppen, die für die Eindickreaktion notwendig sind. In einer besonderen Ausführungsform werden Vinylesterharze monomerenfrei eingesetzt.

2. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)acrylsäureamide, Allylester wie Diallylphthalat, und Vinylester wie Ethylhexansäurevinylester, Vinylpivalat und andere. Desgleichen eignen sich Gemische der genannten olefinisch ungesättigten Monomeren. Bevorzugt geeignet als Komponente 2 sind Styrol, α-Methylstyrol, Chlorstyrol, Vinyltoluol, Divinylbenzol und Diallylphthalat. Die Komponente 2 ist in dem Gemisch im allgemeinen in einer Menge von 20 bis 80, vorzugsweise von 25 bis 75 Gew.% enthalten.

3. Die lichthärtbaren Formmassen werden mit den üblichen Inhibitoren stabilisiert. Beispielhaft genannt seien phenolische Inhibitoren, wie Hydrochinon, subsitutierte Hydrochinone, Brenzcatechin, tert.-Butylbrenzcatechin, kernsubstituierte Brenzcatechinderivate ; Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin sowie deren Gemische. Als zusätzliche Stabilisatoren eignen sich auch Salze des zweiwertigen Kupfers, beispielsweise Kupfer-naphthenate oder -octanoat und quaternäre Ammoniumsalze der Struktur $NR^5R^6, R^7, R^8 \, {}^+X^-$, in der $R^5, R^6, R^7$ und $R^8$ einen Alkylrest mit 7 bis 30 Kohlenstoffatomen und X ein Halogenatom, vorzugsweise Chlor bedeuten.

Der Zusatz ausgewählter UV-Absorber zur Lichtstabilisierung der Härtungsprodukte bewirkt in manchen Fällen eine geringe Herabsetzung der UV-Härtungsgeschwindigkeit, die aber auch in Kauf genommen werden kann. Geeignet sind solche aus den Reihen des Oxibenzophenons, der Salicylsäureester und des Oxiphenylbenztriazols.

Die Inhibitoren sind in dem Gemisch in einer Menge von 0,005 bis 0,5, vorzugsweise 0,01 bis 0,2 Gew.%, enthalten.

4. Als Photoinitiatoren kommen solche in Frage, die durch eingestrahltes Licht der Wellenlängen 300 bis 600 nm zur Radikalbildung angeregt werden. Beispiele sind : Benzilketale, z.B. Benzildimethylketal,

Benzildiethylketal, Benzildipropylketal, Benzilmethylallylketal, Benzilmethylbenzylketal, Benzilethylenketal, Benzilneopentylenketal ; Benzoinether, z.B. Benzoinisobutylether, Benzoinmethylether, Benzoinethylether, Benzoinisopropylether, Methylolbenzoinmethylether ; α-Alkylbenzoinether ; Benzil in Kombination mit aliphatischen Aminen (z.B. Methyldiethanolamin) ; Acylphosphinoxide, z.B. Pivaloyldiphenylphosphinoxid, p-Toluyl-diphenylphosphinoxid, 2,6-Trimethoxybenzoyl-diphenylphosphinoxid, 2,6-Dichlorbenzoyl-diphenylphosphinoxid, 2,6-Dimethylbenzoyl-diphenylphosphinoxid, 2,3,5,6-Tetramethylbenzoyl-diphenylphosphinoxid ; 2,2-Diethoxy-acetophenon, 2-Naphthalinsulfonylchlorid, 1-Butyl-2-naphthalinsulfonylchlorid, 1-Chlormethylnaphthalin ; 1,4-Dibutyl-2-naphthalinsulfonylchlorid ; Disulfide, wie Diphenyldisulfid, p,p-Ditolyldisulfid, β, β-Dinaphthyldisulfid.

Die Lichtinitiatoren werden in einem Konzentrationsbereich von 0,01 bis 3 Gew.%, vorzugsweise von 0,1 bis 1 Gew.%, eingesetzt, wobei auch Gemische davon zur Anwendung kommen können.

5. Als Eindickmittel werden Oxide oder Hydroxide des Lithiums, Magnesiums oder Calciums, sowie Metallalkoholate, z.B. von Magnesium, Calcium, Aluminium oder Titan eingesetzt. Bevorzugt ist Magnesiumoxid. Ferner sind Isocyanate geeignet. Sie werden vor allem bei Vinylesterharzen, die keine Carboxylgruppen tragen, eingesetzt. Bevorzugt sind Diphenylmethandiisocyanat und Toluylendiisocyanat-Präpolymere. Die Eindickmittel kommen in Mengen von 0,2 bis 5, vorzugsweise von 0,5 bis 2,0 Gew.%, bezogen auf das Gemisch, zur Anwendung.

6. Die pulverförmigen Füllstoffe müssen für UV-Licht durchlässig sein, damit die Aushärtung auch bis in tiefere Schichten hinein vollständig ist. Es eignen sich beispielsweise : Aluminiumoxidhydrat, Nephelinsyenit, Glasmehl, Quarzmehl, Quarzsand, Glaskugeln, Bariumsulfat, Talkum sowie feindisperse Kieselsäure. Die pulverförmigen Füllstoffe können in dem Gemisch in Mengen von 1 bis 50 Gew.% enthalten sein.

7. Als Verstärkungsstoffe kommen in Frage : anorganische oder organische Fasern, oder flächige, gegebenenfalls daraus gewebte Gebilde, wie Matten, Gewebe, Gelege, Rovingstränge, z.B. solche aus Glas, Asbest, Cellulose und synthetischen, organischen Hochpolymeren, wie Polyamid, Polyethylen, Polypropylen, Polyacrylnitril und Polyestern, beispielsweise Polyethylenterephthalat.

Die Verstärkungsstoffe können in Mengen von 5 bis 70 Gew.% in dem Gemisch enthalten sein. Vorteilhaft wirkt sich in vielen Fällen eine Kombination von pulverigen Füllstoffen und faserigen Verstärkungsstoffen aus.

8. Als weitere übliche Zusatzstoffe kommen z.B. Gleitmittel, wie Metallstearate, insbesondere solche des Magnesiums und Calciums, oder Polyethylenwachse, in Frage. In Mengen von 1 bis 8 Gew.%, bezogen auf das Gemisch, zugesetzt, vermindern sie die Klebrigkeit des Halbzeugs.

Zusätzlich zu den Eindickmitteln (Komponente 5) können dem Gemisch noch 0,05 bis 2 Gew.% Eindickbeschleuniger zugesetzt werden. Als solche eignen sich Ammoniumchloride (Trimethylbenzylammoniumchlorid, Trimethylcyclohexyl-ammoniumchlorid oder Cholinchlorid), Phosphoniumchloride (z.B. Triphenylmethylphosphoniumchlorid) und Sulfoniumhalogenide. Als weitere Eindickbeschleuniger können wasser (in Mengen von 0,1 bis 0,5 Gew.%) sowie Polyole (Ethylenglykol oder Propandiol-1,2, in Mengen von 0,2 bis 2 Gew.%) dienen.

Zur Verminderung der Monomerenverdunstung und zur Ausbildung einer klebfreien Oberfläche können die Gemische 0,01 bis 5 Gew.%, vorzugsweise 0,1 bis 0,5 Gew.% Paraffine enthalten. Bevorzugt sind Paraffine mit Schmelzpunkten von 25 bis 90°C, vorzugsweise von 45 bis 60°C. Anstelle der Paraffine können auch andere wachsartige Stoffe, beispielsweise die als Montanwachs bekannten Paraffinoxidationsprodukte bzw. deren Ester, langkettige Fettsäuren, wie Stearinsäure, Stearylstearat und dergleichen eingesetzt werden.

Als zusätzliche Initiatoren können dem Gemisch neben den Photoinitiatoren auch noch thermisch zerfallene Radikalbildner in Mengen von 0,05 bis 2,0 Gew.% zugesetzt werden, z.B. Perester, wie tert.-Butyloctanoat, tert.-Butylperpivalat ; Percarbonate, wie Bis-4-tert.-butylcyclohexyl-peroxidicarbonat ; Diacylperoxide, wie Benzoylperoxid ; Dialkylperoxide, wie Di-tert.-butylperoxid und Dicumylperoxid ; Azoverbindungen, wie Azodiisobutyronitril ; sowie C-C-labile Verbindungen wie Tetraphenylbernsteinsäuredinitril, Tetraphenylethandiol oder tetrasubstituierte Dibenzylverbindungen.

Schließlich können auch schrumpfungsmindernde Zusätze, beispielsweise thermoplastische Polymere, wie Polystyrol, Styrolcopolymerisate, Polyvinylacetate oder Polymethacrylate in Mengen von 1 bis 20 Gew.% zugesetzt werden.

Erfindungsgemäß enthalten die photopolymerisierbaren flächigen Formmassen auf 100 Gewichtsteile des Gemisches 1 bis 8 10 bis 500, vorzugsweise 50 bis 200 Gewichtsteile Metalldraht. Die Anzahl und die Dicke der Drähte richtet sich nach der Rückstellkraft des Halbzeugs. Je größer diese ist, desto mehr bzw. desto dickere Drähte müssen in das Halbzeug eingelegt sein, damit dieses nach der Verformung die dabei aufgeprägte Form behält. Die Drahtdicke liegt zwischen 0,1 und 3 mm, vorzugsweise zwischen 0,2 und 2 mm.

Der Metalldraht kann in der Formmasse eindimensional in Form von im wesentlichen parallel liegenden Drähten oder auch in Form einer Helix vorliegen. Im letzten Fall hat die flächige Formmasse die Form eines Rohres, in welches der eindimensionale Draht wendelförmig eingelegt ist.

Vorzugsweise liegt der Draht in der Formmasse aber zweidimensional in Form von Gelegen, Geflechten oder Gittern vor. Im Drahtgitter können die Einzeldrähte entweder–wie bei einem Sieb–geflochten sein oder sie können lose aufgelegt und dann verschweißt sein. Es ist aber auch möglich, unverschweißte Drahtgelege zu verwenden, wobei die Fixierung der Einneldrähte dann durch die Kunststoffmatrix bewirkt wird.

Bevorzugtes Material für die Drähte ist Stahl oder Eisen. Für Spezialzwecke können aber auch Drähte aus Aluminium, Kupfer, legierten Stählen oder andere Metallen verwendet werden.

Bei der Herstellung von Formkörpern aus den Formmassen werden zunächst die oben beschriebenen Komponenten 1 bis 6 und 8 homogen vermischt. Dies kann in offenen Gefäßen z.B. durch kräftiges Rühren geschehen. Werden faserförmige Verstärkungsmaterialien (Komponente 7) in Form von Matten, Geweben, Gelegen, Rovings oder Vliesen eingesetzt, so tränkt man diese zweckmäßigerweise mit dem flüssigen Gemisch der anderen Komponenten.

In den meisten Fällen, insbesondere bei der Herstellung von faserverstärkten Formkörpern, ist es zweckmäßig, das flüssige Gemisch auf einem Trägermaterial aufzubringen. Als Trägermaterialien kommen z.B. Kunststoff-Folien, insbesondere Polyester-, Polyvinylalkohol- oder Celluloseester-Folien, beschichtete Papiere, dünne Schichten (vorzugsweise 0,05 bis 1 mm dick) aus ausgehärteten ungesättigten Polyesterharzen oder Thermoplasten in Frage. Oft ist es auch zweckmäßig, die aufgetragene Schicht des Gemisches mit einer Folie aus gleichem Material zu bedecken. Dadurch wird die Verdunstung von Monomeren verhindert und die Folie dient als Trennschicht gegenüber dem formgebenden werkzeug. Auf den Trägermaterialien liegt das Gemisch im allgemeinen als flache Bahn oder als Streifen vor ; die Dicke liegt dabei vorzugsweise zwischen 1 und 15 mm.

Im nächsten Verfahrensschritt wird das Gemisch zu einem Halbzeug eingedickt. Dies geschieht durch polymeranaloge Umsetzungen des Eindickmittels mit den Endgruppen des ungesättigten Polyesters, wobei der Viskositätsanstieg durch Molekulargewichtsvergrößerung verursacht wird. Das Eindicken kann bei Raumtemperatur erfolgen, es dauert dann im allgemeinen einige Tage. Durch Erhöhen der Temperatur bis auf max. 130°C kann es beschleunigt werden. Bevorzugt wird bei Temperaturen zwischen 50 und 100°C 2 bis 10 min lang eingedickt. Bei dem Eindickprozeß entstehen lagerfähige Halbzeuge, die je nach Art und Menge der Eindickmittel, Füllstoffe bzw. Verstärkungsmaterialien pastenförmige, lederartige oder steife Konsistenz haben.

Der Metalldraht wird erfindungsgemäß entweder vor oder nach dem Eindicken des Harzes in die Formmasse eingelegt. Vor dem Eindicken geschieht dies durch gleichzeitiges Tränken des Drahtgewebes oder -geleges und der Fasermatten mit der flüssigen Harzmischung ; geht man von einer bereits eingedickten Formmasse aus, so legt man den Draht zwischen zwei Halbzeugfolien. Entsprechend kann man auch einen Schichtenaufbau aus mehreren abwechselnden Draht- und Halbzeugschichten herstellen.

Das Verformen des Metalldrahteinlagen enthaltenden Halbzeugs kann zweidimensional erfolgen, z.B. durch Biegen, Abkanten oder Verwölben. Wichtiger ist die dreidimensionale Verformung durch Tiefziehen, Prägen, Pressen oder Stanzen. Hierbei können die in der Kunststoff- und insbesondere die in der Blechverarbeitung üblichen Formapparaturen verwendet werden. Wesentlich ist, daß das verformte Halbzeug seine durch die verformung erhaltene räumliche Gestalt nicht mehr verändert–jedenfalls nicht innerhalb von überschaubaren Zeiträumen von einigen Stunden. Das verformte Halbzeug kann deshalb aus der Formapparatur entnommen, transportiert und gelagert werden und in einem anschließenden Verfahrensschritt außerhalb der Form durch Belichten gehärtet werden. Dadurch werden sehr kurze Taktzeiten möglich, wie sie z.B. bei der Blechverarbeitung üblich sind. Halbzeugrohre mit Metalldrahteinlage sind flexibel und können beliebig gebogen und anschließend ausgehärtet werden. Dies ist bei Rohren ohne Drahteinlage nicht möglich.

Im nächsten verfahrensschritt wird das verformte Halbzeug durch Bestrahlen mit UV-Licht gehärtet. Dazu werden zweckmäßigerweise UV-Strahler mit hoher Emmission im langweiligen Bereich (300 bis 450 nm) verwendet, deren Maximum möglichst zwischen 360 und 390 nm liegt. Vorzugsweise verwendet man Quecksilberdampfniederdrucklampen mit eingeschlämmtem Leuchtstoff (Leuchtstoffröhren) oder Quecksilberdampfhochdrucklampen. In manchen Fällen ist auch direktes Sonnenlicht ausreichend. Zufuhr von Wärme mittels Heißluft oder Infrarot-Strahlern wirkt sich beschleunigend auf die Härtung aus.

In manchen Fällen kann es vorteilhaft sein, die Formkörper zur Erniedrigung des Restmonomerengehaltes einer thermischen Nachhärtung zu unterwerfen. Dies ist besonders dann zweckmäßig, wenn die Gemische ursprünglich schon Radikalbildner, d.h. Peroxide, Azoverbindungen oder C-C-labile Verbindungen enthielten. Die Nachhärtung wird vorteilhaft bei Temperaturen zwischen 80 und 120°C durchgeführt.

Die erfindungsgemäß hergestellten ausgehärteten Formkörper können in vielen Bereichen der Technik verwendet werden, z.B. als Teile im Automobil-, Boots- und Flugzeugbau, in Haushaltsgeräten, als Profile, versteifungsrippen, Rohre, Bedachungselemente, Abdichtungselemente bei Kamindurchbrüchen, Lüftungskanäle, Gehäuse, Wannen,

Abschirmungen gegen elektromagnetische Wellen, sowie als Parabolantennen, wobei die Metalldrahteinlagen zusätzlich die Funktion eines elektrischen Leiters übernehmen. Bei großflächigen Teilen, z.B. bei Fahrzeugen, bringen Metallgittereinlagen den Vorteil, daß das Material beim Bruch nicht splittert, sondern durch die Drähte zusammengehalten wird.

**Ansprüche**

1. Photopolymerisierbare, flächige Formmassen, enthaltend ein Gemisch aus
1. einem ungesättigten Polyester,
2. gegebenenfalls einer copolymerisierbaren Vinylverbindung,
3. 0,005 bis 0,5 Gew.-% eines Inhibitors,
4. 0,01 bis 3 Gew.-% eines Photoinitiators,
5. 0,2 bis 5 Gew.-% eines als Eindickmittel wirkenden Oxids oder Hydroxids von Lithium, Magnesium oder Calcium, oder eines Metallalkoholats oder eines Isocyanats,
6. 1 bis 50 Gew.-% eines UV-Licht-durchlässigen pulverförmigen Hilfsstoffes, und/oder
7. 5 bis 70 Gew.-% eines faserförmigen Verstärkungsmaterials, sowie gegebenenfalls
8. weitere übliche Zusatzstoffe, wobei sich die Prozentangaben auf das Gemisch beziehen, dadurch gekennzeichnet, daß sie auf 100 Gew.-Teile des Gemisches 10 bis 500 Gew.-Teile Metalldraht mit einer Dicke zwischen 0,1 und 2 mm in Form von Gelegen oder von geflochtenen oder verschweißten Gittern eingelegt enthalten.

2. Verfahren zur Herstellung von Formkörpern aus verstärkten Polyesterharzen durch
A. Herstellen eines Gemisches aus
1. einem ungesättigten Polyester,
2. gegebenenfalls einer copolymerisierbaren Vinylverbindung,
3. 0,005 bis 0,5 Gew.-% eines Inhibtors,
4. 0,01 bis 3 Gew.-% eines Photoinitiators,
5. 0,2 bis 5 Gew.-% eines als Eindickmittel wirkenden Oxids oder Hydroxids von Lithium, Magnesium oder Calcium, oder eines Metallalkoholats oder eines Isocyanats,
6. 1 bis 50 Gew.-% eines UV-Licht-durchlässigen pulverförmigen Hilfsstoffes, und/oder
7. 5 bis 70 Gew.-% eines faserförmigen Verstärkungsmaterials, sowie gegebenenfalls
8. weitere übliche Zusatzstoffe, wobei sich die Prozentangaben auf das Gemisch beziehen,
B. gegebenenfalls Aufbringen des Gemisches auf ein flächiges Trägermaterial,
C. Eindicken des Gemisches zu einem Halbzeug,
D. Verformen des Halbzeugs,
E. Aushärten durch Bestrahlung mit UV-Licht,
F. gegebenenfalls thermische Nachbehandlung, dadurch gekennzeichnet, daß in das Gemisch vor oder nach dem Eindicken Metalldrähte mit einer Dicke zwischen 0,1 und 2 mm in Form von Gelegen oder von geflochtenen oder geschweißten Gittern eingelegt werden.

3. Verfahren nach Anspruch 2, dadurch gekennzeichnet, daß das Verformen des Halbzeugs durch Tiefziehen, Prägen, Pressen oder Stanzen in einer Form vorgenommen wird, und daß das verformte Halbzeug außerhalb der Form gehärtet wird.

**Claims**

1. A photopolymerizable, sheet-like molding material containing a mixture of
1. an unsaturated polyester with or without
2. a copolymerizable vinyl compound,
3. 0.005-0.5% by weight of an inhibitor,
4. 0.01-3% by weight of a photoinitiator,
5. 0.2-5% by weight of a thickening oxide or hydroxide of lithium, magnesium or calcium or of a metal alcoholate or of an isocyanate,
6. 1-50% by weight of an ultraviolet-transmitting pulverulent assistant and/or
7. 5-70% by weight of a fibrous reinforcing material, with or without
8. other conventional additives, the percentages being based on the mixture, wherein the material contains from 10 to 500 parts by weight of inserted metal wire having a thickness of from 0.1 to 2 mm in the form of laid structures or of braided or welded meshes per 100 parts by weight of the mixture.

2. A process for the production of moldings of reinforced polyester resins by
A. producing a mixture of
1. an unsaturated polyester with or without
2. a copolymerizable vinyl compound,
3. 0.005-0.5% by weight of an inhibitor,
4. 0.01-3% by weight of a photoinitiator,
5. 0.2-5% by weight of a thickening oxide or hydroxide of lithium, magnesium or calcium or of a metal alcoholate or of an isocyanate,
6. 1-50% by weight of an ultraviolet-transmitting pulverulent assistant and/or
7. 5-70% by weight of a fibrous reinforcing material, with or without
8. other conventional additives, the percentages being based on the mixture,
B) if appropriate, applying the mixture to a sheet-like carrier,
C) thickening the mixture to form a semi-finished product,
D) shaping the semi-finished product,
E) curing it by ultraviolet irradiation and
F) if appropriate, subjecting it to a thermal aftertreatment, wherein metal wires having a thickness of from 0.1 to 2 mm in the form of laid